# EUROPEAN PATENT APPLICATION

(11) **EP 4 718 181 A1**
(43) Date of publication of application: **01.04.2026**
(21) Application number: 25182092.4
(22) Date of filing: 11.06.2025
(51) Int. Cl.: G05B 19/418

(54) **SYSTEM FOR INTERACTIVE MACHINE PARAMETERS OPTIMIZATION THROUGH BATCHES AND STAGE-TESTING, AND METHOD FOR USING THE SAME**

(30) Priority: 25.09.2024 CN 202411341063
(71) Applicant: Delta Electronics, Inc., Taoyuan County 33341 (TW)
(72) Inventor: CHEN, Sheng-Hua, 33341 Taoyuan City (TW); FANG, Sih-Han, 33341 Taoyuan City (TW); SHIH, Chung-Shan, 33341 Taoyuan City (TW)
(74) Representative: 2K Patentanwälte Blasberg Kewitz & Reichel

(57) **Abstract**

A system (1) for interactive machine parameters optimization including a database (12) and a processor ()11 is disclosed. The database (12) records multiple parameter categories (121), which are used for quality test. The processor (11) executes following actions: obtaining a batch recommended parameter combinations number; generating at least one parameter combination according to the parameter categories (121) and the batch recommended parameter combinations number; performing at least one stage-testing to a product produced based on the parameter combination to generate a testing result for the parameter combination of each stage-testing, wherein, until current stage reaches a preset testing stage, obtaining another parameter combination satisfied current stage-standard and performing next stage-testing to the product corresponding to the obtained parameter combination; generating an optimized parameter combination when the preset stage is reached and a default termination condition is satisfied; and, when the preset stage is reached but the default termination condition is unsatisfied, repeating the actions.

## Description

### BACKGROUND OF THE DISCLOSURE

### Technical Field

The disclosure relates to a system and a method for parameters optimization, and particularly to a system and a method for interactive machine parameters optimization.

### Description of Related Art

Modern industrial production lines utilize a high-mix, low-volume manufacturing model. To do so, the production lines have to be changed frequently. The frequent changeovers require regular adjustments to the operating parameters of the machines. However, the current production lines are often adjusted based on operators' empirical rules (e.g., trial-and-error methods), such adjustment methods are inefficient and limited by the experience and intuition of the operators, leading to complex and time-consuming parameter adjustments for the machines.

Furthermore, during the parameter adjustment process, it is necessary to test the products produced by the machine based on various parameters. However, with the increasing number of testing items and the growing complexity of the manufacturing processes, longer test waiting times are required, resulting in increasingly longer quality testing times.

Current common machine testing methods mostly involve comprehensive product quality testing, lacking of the concept of stage-testing. For example, the pre-planned experimental methods (such as the Taguchi method and the exhaustive search method) involve completing the setting of all experimental parameter combinations before the experiment is initiated, and testing all the experimental parameter combinations at once. In addition, even if the interactive experimental methods (such as Bayesian optimization) dynamically adjust the subsequent experimental plans based on the experimental process, the methods only recommend one set of parameters for experimentation in each round. In other words, the current machine testing methods lack stage-testing and batch parameter recommendation, and are unfavorable for industrial production processes that emphasize production efficiency and require frequent line changeovers.

### SUMMARY OF THE DISCLOSURE

The present disclosure is directed to a system and a method for interactive machine parameters optimization through batches and stage-testing, through the approach of stage-testing, saving the testing time in the tedious and lengthy testing procedure. Also, the present disclosure utilizes the model of batch parameter recommendation, enabling the system to reduce the recommendation round, thereby shortening the time of finding the optimal parameters.

In one of the exemplary embodiments, the system of the present disclosure includes:
a database, recording multiple parameter categories; and
a processor, connected with the database, and configured to execute the following procedures:
   (a) obtaining a batch recommended parameter combinations number, a testing stages number, and a default termination condition;
   (b) generating at least one parameter combination based on the multiple parameter categories and the batch recommended parameter combinations number;
   (c) indicating the external machine to perform at least one stage-testing to at least one product that is produced based on each of the at least one parameter combination, and obtaining a stage testing result corresponding to each of the at least one stage-testing from the external machine;
   (d) determining whether a stage number of the currently performed stage-testing reaches the testing stages number;
   (e) determining whether the default termination condition is satisfied when the stage number reaches the testing stages number;
   (f) generating an optimal parameter combination based on all the stage testing results previously obtained when the default termination condition is satisfied; and
   (g) re-executing the procedure (b) to (f) when the default termination condition is not yet satisfied;
wherein the procedure (c) includes: when the stage number has not yet reached the testing stages number, obtaining one of the at least one parameter combination corresponding to the stage testing result that satisfies a stage standard and performing a next stage-testing to at least one product produced based on the obtained parameter combination.

In one of the exemplary embodiments, the method of the present disclosure includes:
a) obtaining multiple parameter categories from a database;
b) setting a batch recommended parameter combinations number, a testing stages number, and a default termination condition by a processor;
c) generating at least one parameter combination based on the multiple parameter categories and the batch recommended parameter combinations number by the processor;
d) performing at least one stage-testing to at least one product that is produced based on each of the at least one parameter combination, and generating a stage testing result corresponding to each of the at least one stage-testing;
e) determining whether a stage number of the currently performed stage-testing reaches the testing stages number by the processor;
f) determining whether the default termination condition is satisfied when the stage number reaches the testing stages number;
g) generating an optimal parameter combination based on all the stage testing results previously obtained by the processor when the default termination condition is satisfied; and
h) re-executing the step c) to g) when the default termination condition is not yet satisfied;
wherein, the step d) includes: when the stage number has not yet reached the testing stages number, obtaining one of the at least one parameter combination corresponding to the stage testing result that satisfies a stage standard and performing a next stage-testing to at least one product produced based on the obtained parameter combination.

In comparison with related art, the present disclosure utilizes the approach of batch parameter recommendation and stage-testing to enable the system to obtain the optimal parameters in shortest time, which is suitable for the production lines that require frequent line changeovers and high parameter adjustment efficiency.

### BRIEF DESCRIPTION OF THE DRAWINGS

FIG. 1 is a block diagram of an optimizing system of the present disclosure according to an embodiment.
FIG. 2 is a flowchart of an optimizing method of the present disclosure according to an embodiment.
FIG. 3 is a schematic diagram of an input interface of the present disclosure according to an embodiment.
FIG. 4 is a schematic diagram of a parameter recommendation page of the present disclosure according to a first embodiment.
FIG. 5 is a schematic diagram of a testing result reporting page of the present disclosure according to a first embodiment.
FIG. 6 is a schematic diagram of a testing result reporting page of the present disclosure according to a second embodiment.
FIG. 7 is a schematic diagram of a testing result reporting page of the present disclosure according to a third embodiment.
FIG. 8 is a schematic diagram of a testing result reporting page of the present disclosure according to a fourth embodiment.
FIG. 9 is a schematic diagram of a parameter recommendation page of the present disclosure according to a second embodiment.

### DETAILED DESCRIPTION OF THE DISCLOSURE

The present disclosure discloses a system and a method for interactive machine parameters optimization through batches and stage-testing, which can recommend multiple sets of parameter combinations for experiments in batches, thereby shortening the overall experiment time. Also, the disclosure divides a testing item into multiple testing stages to avoid unnecessary testing actions. In addition, the system and method of the present disclosure can perform interactive experiments, which can recommend a parameter combination for next round (i.e., round n) of experiment based on all testing results up to the present (i.e., from round 1 to round n-1), or recommends a parameter combination for next round of experiment based on all of the historical testing data (i.e., testing results) to improve the adaptation of the recommended parameter combination.

In particularly, the testing methods performed by regular machines are mostly pre-planned experimental methods, which complete the setting of all experimental parameter combinations at once before the experiment is initiated, and then complete the testing of all the experimental parameter combinations at once to generate the experimental results. In comparison, the system and method of the present disclosure involve interactive experiments, so that the system and the machine can interact with each other. In the present disclosure, the system first generates a batch of recommended parameter combinations. The machine performs a first round of experiments based on the recommended parameter combinations and feeds the experimental results to the system. Next, the system recommends the parameter combinations for the next round of experiment based on the experimental results from the first round of experiment.

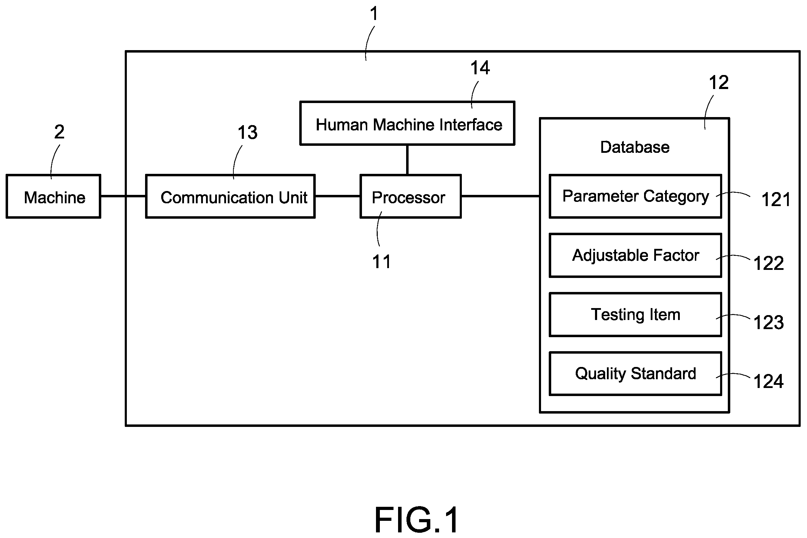

FIG. 1 is a block diagram of an optimizing system of the present disclosure according to an embodiment. As shown in FIG. 1, the system for interactive machine parameter optimization through batches and stage-testing of the present disclosure (referred to as the optimizing system 1 hereinafter) at least includes a processor 11 and a database 12, wherein the processor 11 is connected with the database 12.

In one embodiment, the processor 11 is a central processing unit (CPU), a micro control unit (MCU), a programmable logic controller (PLC), a system on chip (SoC), or a field programmable gate array (FPGA), etc. The database 12 is a double data rate (DDR) memory, a flash memory, a random-access memory (RAM), a read only memory (ROM), a hard disk drive (HDD), a solid-state drive (SSD), or the combination of above. The database 12 records a computer executable program code (not shown). After the optimizing system 1 boots and the processor 11 reads and executes the computer executable program code, the method for interactive machine parameter optimization through batches and stage-testing of the present disclosure (referred to as the optimizing method hereinafter) can be implemented by the processor 11.

The optimizing system 1 of the present disclosure may further include a communication unit 13 connected with the processor 11. As shown in FIG. 1, the communication unit 13 of the optimizing system 1 is utilized to connect to an external machine 2 through wired or wireless manners. One purpose of the disclosure is enabling the optimizing system 1 to automatically recommend suitable parameter combinations based on the product to be produced by the machine 2 after the changeover. Therefore, after the machine 2 performs necessary testing to the parameter combinations recommended by the optimizing system 1, an optimal parameter combination being adapted to produce the product can be determined.

As shown in FIG. 1, the database 12 records multiple parameter categories 121, one or more adjustable factors 122 of each parameter category 121, one or more testing items 123 included in one or more testing stages, and a quality standard 124 for each testing item 123, etc. The data recorded in the database 12 belongs to scenarios that are necessarily to be pre-defined by the optimizing system 1 (for example, automatically defined according to the product specification of the product being produced), and the data is recorded to the database 12 after being defined completely. In another embodiment, the data in the database 12 can be manually inputted to the optimizing system 1 to store to the database 12 by the user upon using the optimizing system 1.

In one embodiment, the optimizing system 1 records multiple parameter categories 121 and adjustable factors 122 (such as a minimum adjustment increment, an adjustment unit, an upper limit, and a lower limit, etc.) corresponding to each of the parameter categories 121 based on one or more products being produced by the machine 2. When the optimizing system 1 is triggered to recommend one or more sets of the parameter combinations, the processor 11 generates a recommended parameter value for each parameter category 121 based on these adjustable factors 122, so that the machine 2 can perform experiments by utilizing the one or more parameter combinations recommended by the optimizing system 1. In the end, an optimal parameter combination can be found.

The aforementioned parameter categories 121 and adjustable factors 122 are exampled as the following table, but not limited thereto.

| Parameter | Minimum Adjustment Increment | Adjustment Unit | Adjustment Range | |
|---|---|---|---|---|
| | | | Lower Limit | Upper Limit |
| Parameter 1 | 1 | mm/s | 100 | 350 |
| Parameter 2 | 1 | Kg/_{cm2} | 450 | 800 |
| Parameter 3 | 0.1 | S | 0.6 | 1.2 |
| ... | ... | ... | ... | ... |
| Parameter 12 | 1 | °C | 260 | 275 |

In the above table, the number of the parameter categories 121 is twelve (i.e., parameter 1 to parameter 12), but not limited thereto. Different products may have different number and content of parameter categories 121. Taking an injection molding machine as an example, the parameter categories 121 of the injection molding machine may include injection speed, injection pressure, holding pressure speed, and holding pressure, etc.

When the machine 2 produces corresponding products (i.e., products to be tested) according to the one or more parameter combinations recommended by the optimizing system 1, the machine 2 performs testing to these products based on the aforementioned testing items 123 and the quality standard 124 of each testing item 123. Then, the optimizing system 1 recommends another one or more parameter combinations for the next round based on the testing results for these products in the previous round. In one embodiment, the quality standard 124 may include, for example but not limited to, the unit of the testing items 123, the specification of the testing value, the optimization goal, the specification requirement, and the pass/fail criteria, etc.

The testing items 123 and the quality standard 124 are exampled as the following table, but not limited thereto.

| Testing Item Unit | Appearance Inspection 1 none | Appearance Inspection 2 none | Detailed Inspection 3 mg | Detailed Inspection 4 µm |
|---|---|---|---|---|
| Specification of the Testing Value | [0, 1, ..., 5] | [0, 1, ..., 5] | [0, ∞) | [0, ∞) |
| Optimization Goal | Smaller | Smaller | Smaller | Smaller |
| Specification Requirement | 0 | 0 | [0,10] | [0,60] |
| Pass/Fail Criteria | All Testing Items Satisfied the Specification Requirement | | All Testing Items Satisfied the Specification Requirement | |

In the above table, the number of the testing items 123 is four (including the appearance inspection 1, the appearance inspection 2, the detailed inspection 3, and the detailed inspection 4), but different products may have different number and content of testing items 123, it is not limited to the above table.

As shown in FIG. 1, the optimizing system 1 of the present disclosure further has a human machine interface 14 that is connected with the processor 11. In one embodiment, the optimizing system 1 receives a batch recommended combinations number, a testing stages number, and a default termination condition externally inputted by the user through the human machine interface 14. As discussed above, the optimizing system 1 of the present disclosure shortens the overall experimental time through batch recommendation and stage-testing. In one embodiment, the batch recommended combinations number represents the number (such as 3 combinations or 5 combinations, etc.) the optimizing system 1 needs to recommend simultaneously in each round. The testing stages number represents the number that how many testing stages the machine 2 needs to divide the product testing into (for example, in the above table, the multiple testing items 123 are divided into two testing stages including a first stage of the appearance inspection and a second stage of the detailed inspection). The default termination condition represents when the optimizing system 1 should repeatedly perform the batch recommendation (i.e., the number of execution rounds).

In another embodiment, the optimizing system 1 stores the batch recommended combinations number, the testing stages number, and the default termination condition to the database 12 through pre-settings for the processor 11 to read and use, but not limited thereto.

When the machine 2 undergoes a line changeover and requires the optimizing system 1 to recommend parameter combinations, the user first needs to operate the optimizing system 1 through the human machine interface 14, selecting the product to be experimented within the optimizing system 1. Next, the optimizing system 1 automatically obtains a pre-stored template corresponding to the selected product, and retrieves data such as the multiple parameter categories 121, the multiple adjustable factors 122, the multiple testing items 123, and the quality standard 124 for each testing item 123 corresponding to this template from the database 12.

The optimizing system 1 receives the batch recommended combinations number (for example, 3 combinations), the testing stages number (for example, 2 testing stages), and the default termination condition (for example, 6 rounds) required by this testing through the human machine interface 14 (or reads from the database 12). After obtaining the above data, the processor 11 of the optimizing system 1 generates one or more sets of parameter combinations based on each parameter category 121 and the batch recommended combinations number, wherein the number of the one or more parameter combinations is the same as the batch recommended combinations number inputted by the user. For example, if the batch recommended combinations number is K, the processor 11 will generate K sets of parameter combinations at a time, wherein each parameter combination respectively includes recommended parameter values for all of the parameter categories 121. It should be mentioned that the processor 11 generates the one or more parameter combinations based on the one or more adjustable factors 122 of each parameter category 121 and the batch recommended combinations number, i.e., the processor 11 calculates and generates the recommended parameter values for each parameter category 121, so the recommended parameter value of each parameter category 121 in each parameter combination is different. The batch recommended combinations number K is a positive integer, and K≥ 1.

After the K sets of parameter combinations are generated, the machine 2 automatically obtains the K sets of parameter combinations, or the user may input the K sets of parameter combinations to the machine 2. Therefore, the machine 2 may produce one or more products correspondingly based on the K sets of parameter combinations, wherein each product is respectively corresponding to one parameter combination. Next, the machine 2 or other inspection apparatus (not shown) performs testing respectively on the one or more products and respectively generates a corresponding testing result for each product.

It should be mentioned that, when testing the products, based on the preset testing stages number, the machine 2 will only perform the one or more testing items of a first stage-testing and feed the corresponding testing results to the optimizing system 1. Only when at least one product passes all the testing items of the first stage-testing, the machine 2 proceeds to perform next stage-testing (such as a second stage-testing) on this product. Therefore, a technical effect of improving testing efficiency can be reached through stage-testing.

In one embodiment, the optimizing system 1 obtains a repeated testing number M from the user through the human machine interface 14, wherein the repeated testing number M represents the number that the user demands each parameter combination to be tested. For example, if the batch recommended combinations number K is 3 and the repeated testing number M is 2, the machine 2 will produce two products respectively for each parameter combination recommended by the optimizing system 1 in this round. Therefore, in this round, the machine 2 needs to produce six products in total, and perform the stage-testing on these six products respectively.

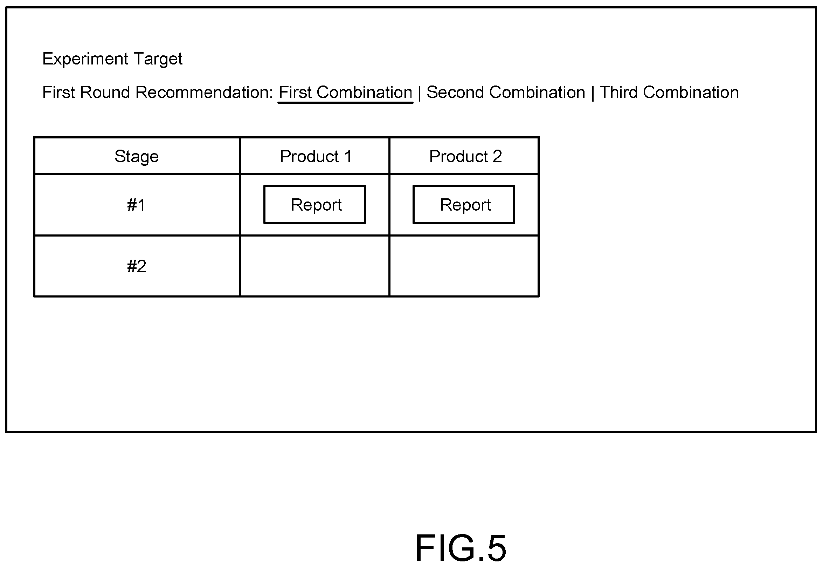

After the machine 2 performs all the testing items 123 of an i-th stage-testing (wherein 1≤i≤L, and L represents the testing stages number) to the K products respectively produced based on the K parameter combinations, the optimizing system 1 can obtain the testing results for these products in the i-th stage-testing. In the present disclosure, the optimizing system 1 obtains the testing results for each product (i.e., each parameter combination) in the i-th stage-testing. Furthermore, only when it is determined that at least one product (i.e., one of the K parameter combinations) has passed all the testing items 123 of the i-th stage-testing, a feedback mechanism for a next stage-testing (i.e., an (i+1)-th stage-testing) of this parameter combination will be triggered. Also, only when the feedback mechanism for the next stage-testing of one parameter combination is triggered, the processor 11 of the optimizing system 1 can further obtain the testing result for the product corresponding to this parameter combination in the next stage-testing through the triggered feedback mechanism (such as reporting columns shown in FIG. 5). In other words, after at least one product passes all the testing items 123 of the i-th stage-testing, the machine 2 has the necessity to perform the (i+1)-th stage-testing on this product, and the optimizing system 1 has the necessity to receive the testing results after this product undergoes the (i+1)-th stage-testing.

As a result, after the machine 2 finishes the i-th stage-testing to the K products, the processor 11 of the optimizing system 1 first determines whether the stage number of the currently performed i-th stage-testing has reached the testing stages number (i.e., whether the testing is completed). If the stage number of the currently performed i-th stage-testing has not yet reached the testing stages number, for one or more products that satisfy the stage standard for all testing items 123 of the i-th stage-testing, the processor 11 respectively obtains the one or more parameter combinations corresponding to the one or more products, performs the next stage-testing (i.e., the (i+1)-th stage-testing) on the products produced according to these parameter combinations, and obtains the testing results generated after the one or more testing items 123 included in the next stage-testing are performed to these products.

In one embodiment, the optimizing system 1 utilizes the processor 11 to generate production instructions based on the K parameter combinations and utilizes the communication unit 13 to transmit the production instructions to the machine 2. Therefore, the machine 2 automatically produces K products correspondingly. In this embodiment, the optimizing system 1 automatically receives the testing results generated after the testing (such as the i-th stage-testing and the (i+1)-th stage-testing, etc.) is performed on these products from the machine 2 through the communication unit 13. In another embodiment, after the processor 11 generates the K parameter combinations, it is the user who manually controls the machine 2 to produce the one or more products correspondingly based on the K parameter combinations. In this case, after the testing is completed, it is also the user who manually inputs the testing results of these products to the optimizing system 1.

In the present disclosure, the optimizing system 1 and the machine 2 keep repeating the aforementioned actions. In other words, for the one or more products that have passed all the testing items 123 of the next stage-testing, the machine 2 will perform testing of the one or more testing items 123 of the next stage-testing, and the optimizing system 1 obtains the testing results for these products in the next stage-testing, until the stage number of the currently performed stage-testing reaches the preset testing stages number. It should be mentioned that, if all products fail the i-th stage-testing, the machine 2 will not proceed to the (i+1)-th stage-testing and terminate the testing procedure for this time. Similarly, if all products fail the (i+1)-th stage-testing, the machine 2 will not proceed to the (i+2)-th stage-testing.

When performing the testing and obtaining the testing results, the processor 11 continuously determines whether the stage number of the currently performed stage-testing has reached the preset testing stages number, i.e., the processor 11 determines whether all the stage-testing are completed. If the stage number of the currently performed stage-testing reaches the testing stages number, it represents that the K parameter combinations generated this time are completed the stage-testing. In the meantime, the processor 11 determines whether the default termination condition inputted by the user is satisfied. For example, the processor 11 determines whether the number of execution rounds has reached, or any of the products satisfies the quality standard 124 of all testing items 123 in all testing stages, etc.

In one embodiment, the default termination condition is the number of execution rounds for the action of recommending the K parameter combinations. In this embodiment, when the processor 11 determines that the stage number of the currently performed stage-testing reaches the testing stages number, it further determines whether the recommending time of recommending the K parameter combinations has reached the number of execution rounds. If the recommending time of recommending the K parameter combinations (such as 2 times) has not yet reached the number of execution rounds (such as 3 times), the processor 11 will proceed to the next round, recommend new K sets of parameter combinations (i.e., the 3^{rd} times) in the next round, and then perform testing on the new K sets of parameter combinations.

In one embodiment, the default termination condition is that the stage testing results for at least one product (i.e., corresponding to at least one of the parameter combinations) satisfy the quality standard 124 of all testing items across all stage-testing. In the embodiment, when the processor 11 determines that the stage number of the currently performed stage-testing reaches the testing stages number, the processor 11 further determines whether the stage testing results of any product has satisfied the quality standard 124 of all testing items across all stage-testing (for example, specification of the testing value, optimization goal, or specification requirement, for each stage-testing). If any product satisfies the above condition, the processor 11 directly considers the parameter combination corresponding to this product as an optimal parameter combination and stops recommending new parameter combinations.

When determining that the stage number of the currently performed stage-testing reaches the testing stages number but the default termination condition has not yet satisfied, the processor 11 refers to all the testing results obtained so far, and selectively refers the historical testing data of the machine 2, to automatically recommend new K sets of parameter combinations. In the meantime, the optimizing system 1 and the machine 2 repeatedly perform the aforementioned actions to perform stage-testing to the new K products corresponding to the new K parameter combinations and obtain the testing results for the new K products respectively in each stage.

When determining that the stage number of the currently performed stage-testing reaches the testing stages number and the default termination condition is satisfied, the testing procedure for this time can be terminated. In the meantime, the optimizing system 1 automatically generates and recommends an optimal parameter combination based on all testing results obtained across all stage-testing and selectively on the historical testing data of the machine 2.

In one embodiment, the processor 11 may adopt statistical methods, machine learning methods, or Bayesian optimization methods to generate the parameter combinations and the optimal parameter combination based on one or more testing results. However, the above description is only one embodiment of the present disclosure, but not limited thereto.

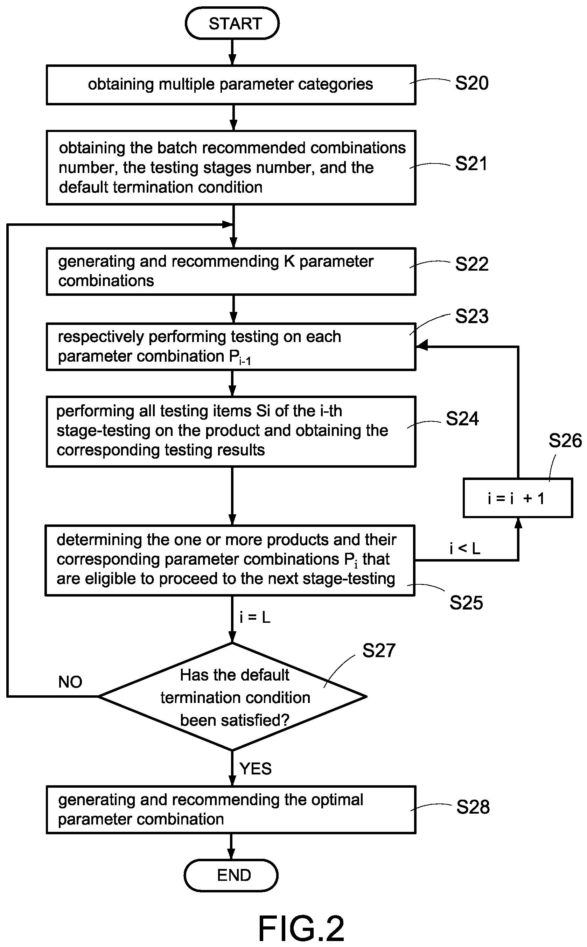

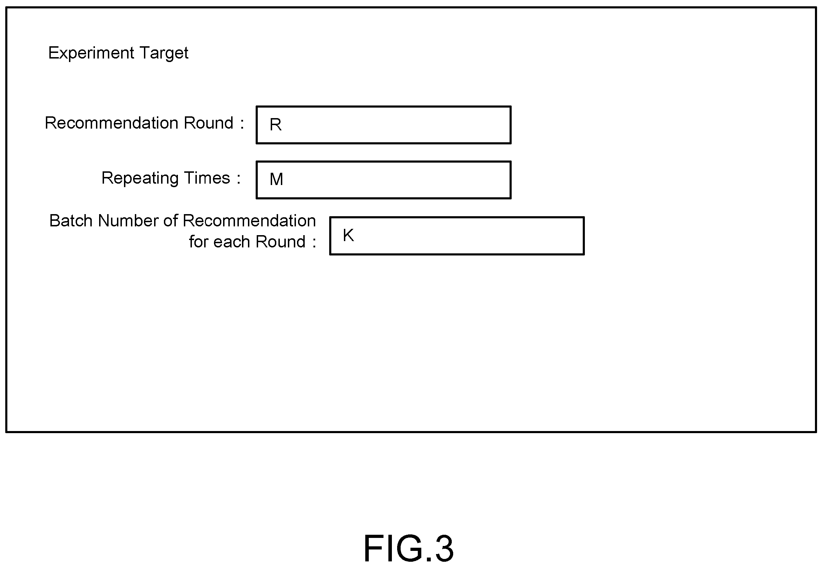

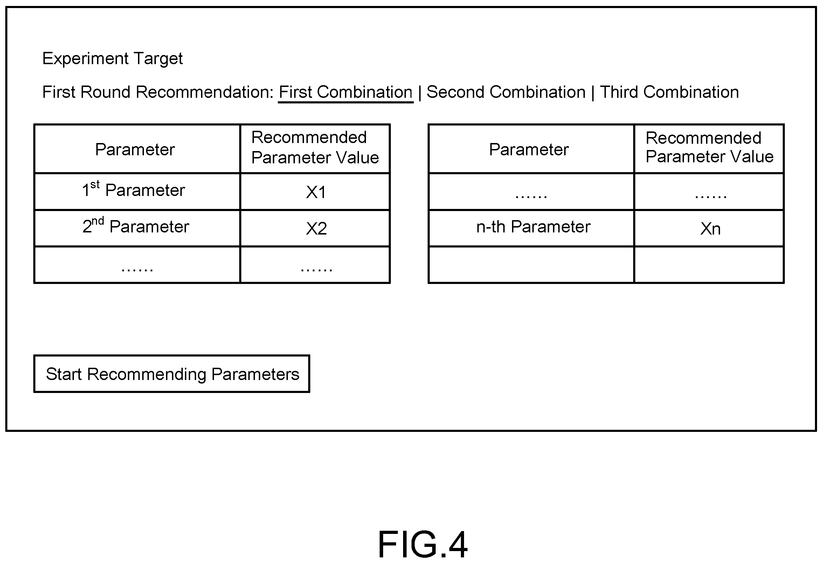

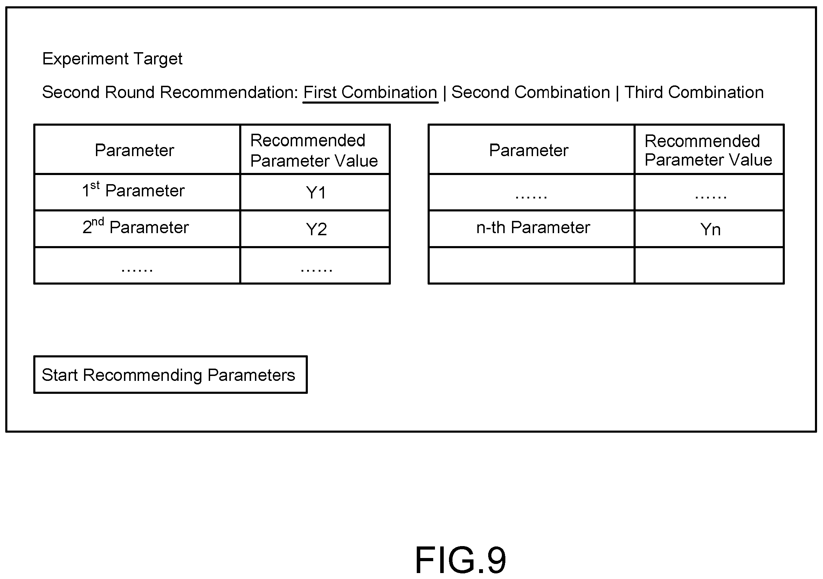

Please refer to FIG. 2 through FIG. 9 at the same time, wherein FIG. 2 is a flowchart of an optimizing method of the present disclosure according to an embodiment, FIG. 3 is a schematic diagram of an input interface of the present disclosure according to an embodiment, FIG. 4 is a schematic diagram of a parameter recommendation page of the present disclosure according to a first embodiment, FIG. 5 to FIG. 8 are schematic diagrams of a testing result reporting page of the present disclosure according to a first embodiment, a second embodiment, a third embodiment, and a fourth embodiment, and FIG. 9 is a schematic diagram of a parameter recommendation page of the present disclosure according to a second embodiment.

FIG. 2 discloses the optimizing method of the disclosure, where the optimizing method is mainly applied to the optimizing system 1 as disclosed in FIG. 1, but not limited thereto.

As shown in FIG. 2, when using the optimizing system 1, a user first needs to trigger the optimizing system 1 (such as activating a parameter recommending interface of the optimizing system 1), and the processor 11 obtains multiple parameter categories 121 from the database 12 (step S20). In one embodiment, the processor 11 obtains the adjustable factors 122 of each parameter category 121 from the database 12, and obtains one or more testing items for each round of the stage-testing from the database 12. In one embodiment, the processor 11 further obtains the quality standard 124 for each testing item 123 from the database 12.

In one embodiment, the user may open a new project on the optimizing system 1, enter a project name, and select a template corresponding to the product to be tested. In the disclosure, each template is respectively corresponding to different product category and records the parameter categories 121, the adjustable factors 122, and the testing items 123 corresponding to this product category. Therefore, after the user selects a specific template, the processor 11 automatically obtains the parameter categories 121, the adjustable factors 122, and the testing items 123 from the database 12 without a manual input made by the user.

It should be mentioned that, if a new experiment or a new product is to be tested, the optimizing system 1 may not have a corresponding template, parameter categories 121, adjustable factors 122, and testing items 123. In this case, the optimizing system 1 may activate the human machine interface 14 for the user to directly input, on the human machine interface 14, the product to be tested, the parameter categories 121 of the product, the adjustable factors 122 of each parameter category 121, and the testing items 123 the product should take, etc. Therefore, when automatically generating the recommended parameter combinations, the optimizing system 1 needs to stick to the above information being inputted.

Next, the processor 11 obtains the batch recommended combinations number, the testing stages number, and the default termination condition (step S21). In one embodiment, the processor 11 receives setting externally through the human machine interface 14 to obtain the batch recommended combinations number, the testing stages number, and the default termination condition. In another embodiment, the batch recommended combinations number, the testing stages number, and the default termination condition are inputted by the user and stored in the database 12. In the step S21, the processor 11 directly obtains the batch recommended combinations number, the testing stages number, and the default termination condition from the database 12.

In one embodiment, the processor 11 obtains the repeated testing number for each parameter combination through the human machine interface 14, where the repeated testing number represents the number of times each parameter combination recommended by the processor 11 needs to be tested. Through repeatedly testing same parameter combinations, the stability of these parameter combinations can be effectively tested.

As shown in FIG. 3, when setting an experiment goal, the optimizing system 1 may receive a recommendation round R (i.e., the number of execution rounds, which can be one of the default termination condition), the repeating times (i.e., the repeated testing number M for each parameter combination), and the batch number of recommendation for each round (i.e., how many parameter combinations need to be recommended in one round, which is the batch recommended combinations number K) inputted by the user through the human machine interface 14. For example, if the user inputs the recommendation round R as 6, the repeating times as 2, the batch number of recommendation for each round is 3 (i.e., R=6, M=2, K=3), it means the optimizing system 1 needs to execute the recommending procedure for 6 rounds, each round requires to recommend 3 parameter combinations in batch, where each parameter combination needs to be tested for 2 times.

After the step S21, the processor 11 automatically generates and recommends K parameter combinations based on each of the parameter categories 121 and the batch recommended combinations number required by the user (step S22). More specifically, the processor 11 generates the K parameter combinations based on the one or more adjustable factors 122 of each of the parameter categories 121 and the batch recommended combinations number required by the user. In the disclosure, K is a positive integer and K≥1. In other words, according to the batch recommended combinations number set by the user, the processor 11 automatically generates a corresponding number of parameter combinations based on the adjustable factors 122, where each parameter combination respectively includes the recommended parameter values (i.e., the parameter values X1~Xn as shown in FIG. 4) for the multiple parameter categories 121 included in this template. In one embodiment, the recommended parameter value for each parameter category 121 of each parameter combination recommended by the processor 11 is not duplicated.

As shown in FIG. 4, assuming that the template selected by the user includes n parameter categories 121 and the batch recommended combinations number K required by the user is 3, when the user triggers a button for initiating the parameters recommendation on the human machine interface 14, the processor 11 automatically generates 3 parameter combinations (a first combination, a second combination, and a third combination are shown in FIG. 4 as an example) based on the adjustable factors 122 of each of the parameter categories 121, where each parameter combination respectively includes n parameter categories 121 (a 1st parameter to an n-th parameter are shown in FIG. 4 as an example) and the recommended parameter values (X1~Xn are shown in FIG. 4 as an example) for each parameter category 121.

For the machine 2, the difference in experiment time per round is not significant between batch recommending multiple parameter combinations and recommending a single parameter combination at a time. However, by adapting the approach of batch recommending multiple parameter combinations, the machine 2 can try more parameter combinations per unit time, which may shorten the entire experiment time (for example, an optimal parameter combination can be found within fewer rounds).

After the step S22, the optimizing system 1 of the present disclosure incorporates with the machine 2 to perform testing on each parameter combination recommended by the processor 11 (step S23). In one embodiment, the optimizing system 1 automatically transmits the multiple parameter combinations recommended by the processor 11 and the repeated testing number set by the user to the machine 2, so the machine 2 produces a corresponding number of products. For example, if the processor 11 recommends 3 parameter combinations and the user sets the repeated testing number as 2, the machine 2 will produce multiple products (such as 6 products but not limited to) correspondingly. In another embodiment, the user may manually input the multiple parameter combinations and the repeated testing number to the machine 2 for the machine 2 to produce the products correspondingly.

It should be mentioned that, after the machine 2 produces the products, it could be the machine 2 itself to respectively perform the stage-testing to these products and generate corresponding testing results, or it could be another inspection apparatus (including the optimizing system 1) to respectively perform the stage-testing to these products and generate corresponding testing results. These testing results will be received by the optimizing system 1.

In the following description, P₀ represents all the K parameter combinations, P₁ represents the one or more parameter combinations passing a first stage-testing, P₂ represents the one or more parameter combinations passing a second stage-testing, and so on. In other words, in the first stage-testing, all the K parameter combinations Pᵢ₋₁ are used, where "i" represents the current stage number. More specifically, the first stage-testing will use all the k parameter combinations (Pᵢ₋₁ = P₀) to perform testing, and one or more of the K parameter combinations (Pᵢ = P₁) may pass the first stage-testing. Similarly, the second stage-testing will use the one or more parameter combinations (Pᵢ₋₁ = P₁) passed the first stage-testing to perform testing, and one or more parameter combinations (Pᵢ = P₂) may then pass the second stage-testing. As shown in FIG. 2, in the i-th stage-testing, the machine 2 or other inspection apparatus performs the one or more testing items 123 (referred to as the testing item Sᵢ hereinafter) included in the i-th stage-testing on the at least one product corresponding to the K parameter combinations Pᵢ₋₁, and the optimizing system 1 obtains the testing results respectively generated after the one or more testing items Sᵢ of the i-th stage-testing have been performed on the at least one product being generated based on the K parameter combinations Pᵢ₋₁ (step S24). In one embodiment, "i" is a positive integer and 1≤i≤L, where L is the testing stages number set by the user.

It should be mentioned that, if the repeated testing number M is greater than or equal to 1, in the step S24, the processor 11 is required to generate M testing results respectively for the at least one product corresponding to each parameter combination after all the testing items Sᵢ of the i-th stage-testing is performed on the at least one product. In one embodiment, the repeated testing represents performing the testing to multiple products corresponding to same parameter combination. In another embodiment, the repeated testing represents performing the testing to same product for multiple times.

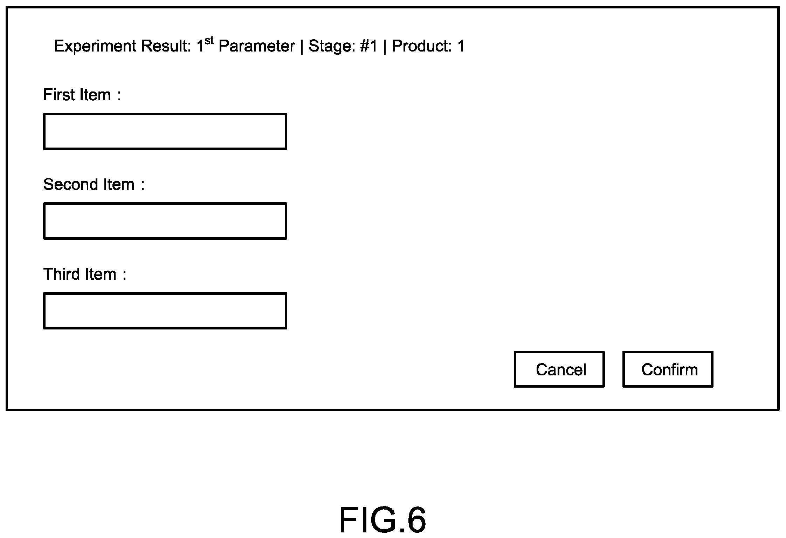

In the embodiments of FIG. 5 and FIG. 6, the testing stages number set by the user is 2 (stage #1 and stage #2 are shown in FIG. 5 as an example), wherein stage #1 includes 3 testing items Sᵢ (a first item, a second item, and third item are shown in FIG. 6 as an example). Also, the repeated testing number M set by the user is 2. In the embodiment, for the first parameter combination, the user or the machine 2 needs to report the testing results for a product 1 and a product 2 to the optimizing system 1.

In one embodiment, the optimizing system 1 can enter the testing result reporting page as shown in FIG. 5 after the multiple parameter combinations recommended in this round are generated, and then the testing results (such as the testing result for the first item, the testing result for the second item, and the testing result for the third item) can be inputted by the user manually or by the machine 2 (or the inspection apparatus) automatically.

After all the testing results for the products in the i-th stage-testing are obtained, the processor 11 of the optimizing system 1 determines whether the testing results of each product meet the quality standard 124 of each testing item Sᵢ. Based on this, the processor 11 determines which product(s) satisfy the quality standards 124 of all testing items Sᵢ of the i-th stage-testing, i.e., determines which product(s) and their corresponding parameter combination(s) Pᵢ are eligible to proceed to the next stage-testing (step S25). For example, the i-th stage-testing includes three testing items Sᵢ, where the specification of the testing value for the three testing items Sᵢ is 0-5 points, the optimization goal for the three testing items Sᵢ is smaller, and the specification requirement for the three testing items Sᵢ is 0 point. In this embodiment, a product is considered satisfying the quality standard 124 of all the testing items Sᵢ of the i-th stage-testing when the testing results for the product in these three testing items Sᵢ are 0 point.

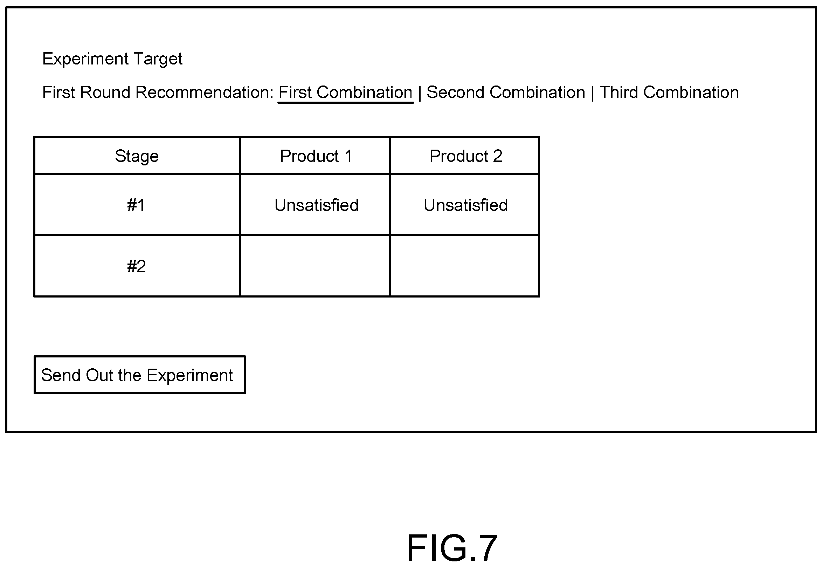

In the embodiment of FIG. 7, the testing results for the two products corresponding to the first parameter combination are not satisfied the standard. In such case, the optimizing system 1 considers the first parameter combination does not satisfy all the testing items of the i-th stage-testing. In the meantime, the optimizing system 1 excludes the first parameter combination from the next stage-testing.

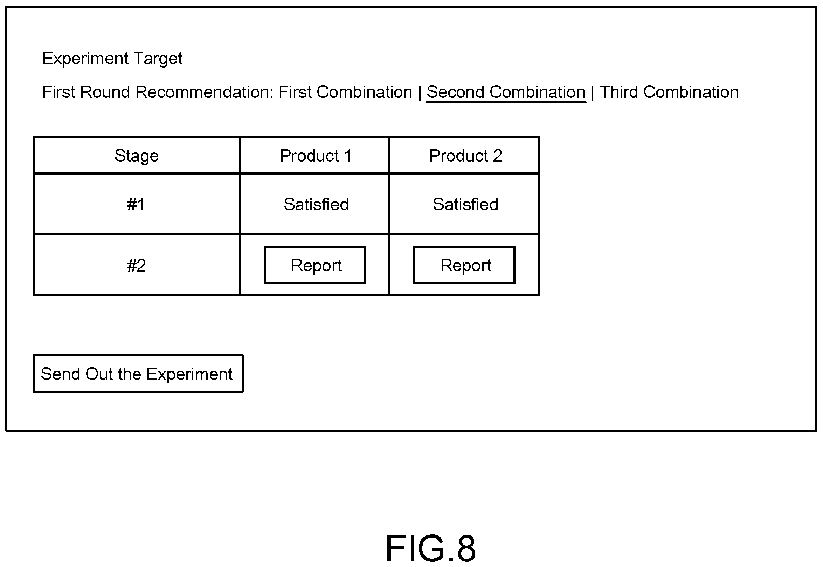

In the embodiment of FIG. 8, the optimizing system 1 considers that the testing results for the two products corresponding to the second parameter combination satisfy the standard. In this case, the optimizing system 1 considers the second parameter combination satisfies the quality standard 124 of all the testing items Sᵢ of the i-th stage-testing. In the meantime, the optimizing system 1 may require the machine 2 or other inspection apparatus to perform the next stage-testing respectively to the two products corresponding to the second parameter combination and wait for the testing results for the two products in the next stage-testing.

It should be mentioned that, in the present disclosure, the processor 11 only triggers a feedback mechanism for the next stage-testing (such as the reporting columns shown in FIG. 8) when all the products corresponding to any of the recommended parameter combinations pass all the testing items Sᵢ of the previous stage-testing. Only when the feedback mechanism for the next stage-testing is triggered (for example, after the report button shown in FIG. 8 is pressed), the user or the machine 2 can input the testing results for the multiple products corresponding to this parameter combination in the next stage-testing into the optimizing system 1. In other words, only after the feedback mechanism for the next stage-testing is triggered, the processor 11 can receive the testing results of the next stage-testing through the triggered feedback mechanism (such as the reporting columns). In the present disclosure, the feedback mechanism includes indicating the parameter combination to be used in the next stage-testing, and waiting for receiving the stage testing results for the at least one product corresponding to the parameter combination proceeded to the next stage-testing.

To be more specific, the stage-testing in the present disclosure divides multiple testing items 124 into multiple testing stages according to their categories, where the testing items 124 of same or similar category will be categorized to same testing stage. For example, a first stage-testing only includes appearance quality testing items (e.g., burn marks, burrs, or underfill, etc.), a second stage-testing only includes dimensional quality testing items (e.g., unbalance angle, unbalance amount, inner circle perpendicularity, or outer circle perpendicularity, etc.). If a parameter combination fails to pass the first stage-testing, it means the product(s) produced based on this parameter combination cannot satisfy the quality requirement. As a result, it is unnecessary to perform the second stage-testing to this parameter combination.

The present disclosure utilizes the stage-testing to effectively avoid the waste of testing time, saving the time cost of repeatedly performing unnecessary testing items, thereby improving the efficiency of parameter adjustment process. For example, the first stage-testing may include appearance testing items that are less time-consuming, while the second stage-testing may include detailed testing items that require precision instruments and are more time-consuming. When a product fails to pass the appearance testing items, it is unnecessary for the optimizing system 1 to perform the time-consuming detailed testing items to this product. Therefore, through adapting the technical solution of stage-testing, the present disclosure can effectively shorten the testing time consumed by traditional complete testing.

In the step S25 of FIG. 2, before determining which parameter combination(s) Pᵢ are eligible to proceed to the next stage-testing, the processor 11 first determines whether the stage number (i.e., "i") of the currently performed stage-testing reaches the testing stages number L set by the user. When i<L (i.e., the parameter combinations recommended in this round has not yet completed all the testing stages), the processor 11 sets i=i+1 (step S26) and re-executes the step S23 to the step S25. Therefore, in the next stage-testing (i.e., (i+1)-th stage-testing), the machine 2 or other inspection apparatus performs testing on the one or more products that satisfied the quality standard 124 of all the testing items Sᵢ of the previous stage-testing (i.e., the i-th stage-testing), and the optimizing system 1 obtains the testing results for these products generated after the one or more testing items Sᵢ₊₁ of the (i+1)-th stage-testing are performed on these products. In other words, when the processor 11 determines that the stage number of the currently performed stage-testing has not yet reached the testing stages number set by the user, the processor 11 obtains the one or more parameter combinations corresponding to the stage testing results that satisfied the stage standard of the currently performed stage-testing, and then performs next stage-testing to the at least one product produced based on the one or more parameter combinations.

Similarly, after the (i+1)-th stage-testing is completed and the user or the machine 2 reports the testing results for the at least one product to the optimizing system 1, the processor 11 determines, based on these testing results, the one or more products and the one or more corresponding parameter combinations Pᵢ₊₁ that is eligible to proceed to the next stage-testing (i.e., (i+2)-th stage-testing).

When i=L, it means the parameter combinations recommended in this round complete all the stage-testing. In other words, the K parameter combinations recommended by the processor 11 in this round are all tested completely. In the meantime, the processor 11 further determines whether the default termination condition set by the user is satisfied (step S27). In one embodiment, the default termination condition includes the number of the execution rounds for the processor 11 to recommend the K parameter combinations. In another embodiment, the default termination condition includes that the testing results for the at least one product corresponding to any of the parameter combinations satisfy the quality standard 124 of all testing items 123 across all stage-testing.

In another embodiment, the default termination condition includes a total experiment number. The total experiment number indicates the total number of the parameter combinations that need to be tested. In the embodiment, the processor 11 may re-execute the step S22 through the step 26 when determining that the stage number of the currently performed stage-testing reaches the testing stages number but the total number of the recommended parameter combinations has not yet reached the total experiment number. Therefore, the processor 11 recommends new parameter combination(s) (not necessary to be K sets) in the next round and performs the testing, until the total number of the recommended parameter combinations reaches the total experiment number and terminates the testing procedure.

For example, if the default termination condition includes the total experiment number as 10 times, the batch recommended combinations number K is set to 3, and the repeated testing number M is set to 1, then because the optimizing system 1 will batch recommend 3 parameter combinations in each round (i.e., three experiments will be performed), in the fourth round, the optimizing system 1 will only recommend one parameter combinations and enables the machine 2 to only perform the last experiment. However, the above description is only one of the exemplary embodiments of the present disclosure, but not limited thereto.

If i=L (i.e., the stage number of the currently performed stage-testing reaches the testing stages number) but the default termination condition has not yet satisfied, the optimizing system 1 goes back to the step S22. In the meantime, the processor 11 refers to the testing results obtained from the previous one or more rounds to automatically generate and recommend new K parameter combinations.

As shown in FIG. 9, after the 3 parameter combinations recommended in the first round are tested completed, the default termination condition has not yet satisfied (for example, the number of the execution rounds is set to 6 times). In the meantime, the processor 11 refers to all the testing results previously obtained (and the processor 11 may selectively refer to the historical data of the optimizing system 1 and/or the machine 2) and recommends new K parameter combinations (in FIG. 9, a first combination, a second combination, and a third combination recommended in the second round are depicted as an example). In one embodiment, after receiving the testing results for each parameter combination in the previous round, the processor 11 respectively scores each parameter combination. Next, the processor 11, based on the scores, in combination with the historical data (i.e., experimental data accumulated in each execution round or the past experimental data of the machine 2), generates new K parameter combinations to be recommended in the next round. Therefore, the machine 2 can produce new one or more products based on the new K parameter combinations and perform stage-testing on the one or more products newly produced, and the optimizing system 1 can obtain the testing results for these products in each stage.

If i=L (i.e., the stage number of the currently performed stage-testing reaches the testing stages number) and the default termination condition is satisfied, the processor 11, based on all the testing results obtained across all the previous stage-testing, generates one optimal parameter combination (step S28). In one embodiment, the processor 11 adopts statistical methods, machine learning methods, or Bayesian optimization methods to calculate and generate the optimal parameter combination based on all previously obtained testing results. When the machine 2 utilizes the optimal parameter combination to product a product, the production process may achieve the best yield, or the produced product may have the best quality.

Compared to the traditional experimental planning methods for machine parameters adjustment, the present disclosure batch recommends multiple sets of parameter combinations by an optimizing system 1, and through an interactive approach, first completes the testing for the parameter combinations recommended in one round, and then batch recommends multiple sets of parameter combinations for the next round based on the testing results. Furthermore, during the testing, a stage-testing method is adopted, which only the one or more parameter combinations that passed the previous stage-testing are eligible to proceed to the next stage-testing. Thereby, an optimal parameter combination recommended by the system can be effectively obtained within the shortest possible time.

## Claims

1. A system (1) for interactive machine parameters optimization through batches and stage-testing, the system (1) connected with an external machine (2), and comprising:
a database (12), recording multiple parameter categories (121); and
a processor (11), connected with the database (12), and configured to execute the following procedures:
(a) obtaining a batch recommended parameter combinations number, a testing stages number, and a default termination condition;
(b) generating at least one parameter combination based on the multiple parameter categories (121) and the batch recommended parameter combinations number;
(c) indicating the external machine (2) to perform at least one stage-testing to at least one product that is produced based on each of the at least one parameter combination, and obtaining a stage testing result corresponding to each of the at least one stage-testing from the external machine (2);
(d) determining whether a stage number of the currently performed stage-testing reaches the testing stages number;
(e) determining whether the default termination condition is satisfied when the stage number reaches the testing stages number;
(f) generating an optimal parameter combination based on all the stage testing results previously obtained when the default termination condition is satisfied; and
(g) re-executing procedure (b) to procedure (f) when the default termination condition is not yet satisfied;
wherein procedure (c) comprises: when the stage number has not yet reached the testing stages number, obtaining one of the at least one parameter combination corresponding to the stage testing result that satisfies a stage standard and performing a next stage-testing to at least one product produced based on the obtained parameter combination.

2. The system (1) in claim 1, wherein the database (12) is configured to record one or more adjustable factors (122) of each of the multiple parameter categories (121), wherein in procedure (b), the processor (11) is configured to generate the at least one parameter combinations based on the one or more adjustable factors (122) of each of the multiple parameter categories (121) and the batch recommended parameter combinations number.

3. The system (1) in any of the previous claims, wherein each of the stage-testing within the testing stages number respectively includes at least one testing item (123), wherein in procedure (c), the processor (11) is configured to determine the at least one product that satisfies the stage standard of all the testing items (123) in the currently performed stage-testing, and regard the at least one parameter combination corresponding to the at least one product as the at least one parameter combination for the next stage-testing, wherein each parameter combination respectively comprises a recommended parameter value for each of the multiple parameter categories (121), and the recommended parameter value of each of the parameter categories (121) in each parameter combination is not duplicated.

4. The system in any of the previous claims, further comprising a human machine interface (14) connected with the processor (11), wherein the human machine interface (14) is configured to receive the batch recommended parameter combinations number, the testing stages number, and the default termination condition, and the default termination condition includes a number of execution rounds for recommending the at least one parameter combination.

5. The system (1) in any of the previous claims, wherein the processor (11) is configured to further execute the following procedures:
obtaining a repeated testing number, wherein the repeated testing number represents the number that each of the at least one parameter combinations required to be tested;
wherein in procedure (c), the processor (11) is configured to repeatedly perform the stage-testing to the at least one product corresponding to each of the at least one parameter combination according to the repeated testing number and generate multiple of the stage testing results.

6. The system (1) in any of the previous claims, wherein in procedure (c), the processor (11) is configured to trigger a feedback mechanism for the next stage-testing when the at least one product corresponding to any of the at least one parameter combination passes all testing items (123) of the currently performed stage-testing, wherein the feedback mechanism includes indicating the one or more parameter combination being used in the next stage-testing, and waiting to receive the stage testing result for the at least one product corresponding to the one or more parameter combination in the next stage-testing.

7. The system (1) in any of the previous claims, wherein the database (12) is configured to further records a quality standard (124) for each of the testing items (123), and the default termination condition includes that the stage testing result for the at least one product corresponding to any of the at least one parameter combination satisfies the quality standard (124) for all stage-testing, wherein the quality standard (124) includes a specification of testing value, an optimization goal, and a specification requirement for each stage-testing.

8. A method for interactive machine parameters optimization through batches and stage-testing, comprising:
step a) obtaining multiple parameter categories (121) from a database (12);
step b) setting a batch recommended parameter combinations number, a testing stages number, and a default termination condition by a processor (11);
step c) generating at least one parameter combination based on the multiple parameter categories (121) and the batch recommended parameter combinations number by the processor (11);
step d) performing at least one stage-testing to at least one product that is produced based on each of the at least one parameter combination, and generating a stage testing result corresponding to each of the at least one stage-testing;
step e) determining whether a stage number of the currently performed stage-testing reaches the testing stages number by the processor (11);
step f) determining whether the default termination condition is satisfied when the stage number reaches the testing stages number;
step g) generating an optimal parameter combination based on all the stage testing results previously obtained by the processor (11) when the default termination condition is satisfied; and
step h) re-executing the step c) to the step g) when the default termination condition is not yet satisfied;
wherein, the step d) comprises: when the stage number has not yet reached the testing stages number, obtaining one of the at least one parameter combination corresponding to the stage testing result that satisfies a stage standard and performing a next stage-testing to at least one product produced based on the obtained parameter combination.

9. The method in claim 8, wherein the step a) comprises obtaining one or more adjustable factors (122) of each of the multiple parameter categories (121) from the database (12), and the step c) comprises generating the at least one parameter combination based on the one or more adjustable factors (122) of each of the multiple parameter categories (121) and the batch recommended parameter combinations number.

10. The method in claim 8 or claim 9, wherein each stage-testing within the testing stages number respectively includes at least one testing item (123), and the step d) comprises: determining the at least one product that satisfies the stage standard of all the testing items (123) in the currently performed stage-testing, and considering the at least one parameter combination corresponding to the at least one product as the at least one parameter combination for the next stage-testing, wherein each of the at least one parameter combination comprises a recommended parameter value for each of the multiple parameter categories (121), and the recommended parameter value of each of the parameter categories (121) in each parameter combination is not duplicated.

11. The method in any of claim 8 to claim 10, wherein the default termination condition includes a number of execution rounds for recommending the at least one parameter combination, the step h) comprises: re-executing the step c) to the step g) when determining that the stage number reaches the testing stages number but an execution time of the step d) has not yet reached the number of execution rounds, and recommending at least one new set of parameter combinations for testing in next round.

12. The method in any of claim 8 to claim 11, wherein the step a) further comprises obtaining a quality standard (124) for each testing item (123) from the database (12), wherein the default termination condition includes that the stage testing result for the at least one product corresponding to any of the at least one parameter combination satisfies the quality standard (124) for all stage-testing, wherein the quality standard (124) includes a specification of testing value, an optimization goal, and a specification requirement for each stage-testing.

13. The method in any of claim 8 to claim 12, wherein the default termination condition includes a total experiment number, the total experiment number is a total number that the at least one parameter combination required to be tested, and the step h) comprises re-executing the step c) to the step g) when the stage number reaches the testing stages time but the total number of the at least one parameter combination being recommended has not yet reached the total experiment number, so as to recommend at least one new parameter combination for testing in next round until the total number of the at least one parameter combination being recommended equals the total experiment number.

14. The method in any of claim 8 to claim 13, further comprising:
step b1) obtaining a repeated testing number by the processor (11), wherein the repeated testing number represents the number that each of the at least one parameter combination required to be tested;
wherein in the step d), the processor (11) repeatedly performs the stage-testing to the at least one product corresponding to each of the at least one parameter combination according to the repeated testing number and generates multiple of the stage testing results.

15. The method in any of claim 8 to claim 14, wherein in the step d), the processor (11) triggers a feedback mechanism for the next stage-testing when the at least one product corresponding to any of the at least one parameter combination passes all testing items (123) of the currently performed stage-testing, wherein the feedback mechanism includes indicating the at least one parameter combination being used in the next stage-testing, and waiting to receive the stage testing result for the at least one product corresponding to the at least one parameter combination in the next stage-testing.
